# EUROPEAN PATENT APPLICATION

(11) **EP 4 793 323 A1**
(43) Date of publication of application: **19.08.2026**
(21) Application number: 24897708.4
(22) Date of filing: 29.11.2024
(51) Int. Cl.: C09B 67/20, C08K 5/34, C08L 101/00, C09B 45/14, C09B 45/22, C09B 47/067, C09B 48/00, C09K 3/00, G02B 5/22

(54) **COMPOSITION, MOLDED BODY, AND DEVICE**

(30) Priority: 01.12.2023 JP 2023204103
(71) Applicant: DIC Corporation, Tokyo 174-8520 (JP)
(72) Inventor: TORIHATA, Yuuki, Kamisu-shi, Ibaraki 314-0193 (JP); MORIMITSU, Taro, Kamisu-shi, Ibaraki 314-0193 (JP)
(74) Representative: TBK
(86) International application number: PCT/JP2024/042394
(87) International publication number: WO 2025/116027

(57) **Abstract**

Provided is a composition containing a pigment and a resin, in which the pigment includes one or more selected from the group consisting of a nickel azo complex pigment, a quinacridone pigment, and a phthalocyanine pigment represented by General Formula (Pc) or a dimer of the phthalocyanine pigment.

## Description

### Technical Field

The present invention relates to a composition, a molded body, and a device.

Priority is claimed on Japanese Patent Application No. 2023-204103, filed on December 1, 2023, the content of which is incorporated herein by reference.

### Background Art

In the related art, infrared cameras and infrared sensors have been used for visualizing infrared radiation emitted from an object in accordance with a change in temperature of the object as changes in the amount of infrared radiation, and have operational stability in the dark as compared with cases where detection is performed using visible light or the like. The infrared cameras and infrared sensors are widely used for diagnosis in the medical field, nondestructive inspection for detecting deterioration of buildings, electrical equipment, and the like, night-vision cameras in the security field, and personal authentication, such as biometric authentication using cameras at ATMs of financial institutions and at airports.

In addition, Light Detection and Ranging (LiDAR) is a remote sensing method that irradiates an object with near-infrared light, visible light, or ultraviolet light and detects reflected light with an optical sensor to measure a distance, and in vehicles, near-infrared (NIR) sensors and the like are used. The LiDAR is currently used as a supplementary technology in adaptive cruise control and the like mounted on vehicles and the like, but is expected to be in significant demand in advanced driver-assistance systems (ADAS) or future autonomous driving (AD), and advanced LiDAR is required for promoting ADAS/AD.

As materials for optical members such as the cameras and sensors described above, optical glass or optical resin is used. Among these, examples of materials that block visible light and have infrared transmittance include a thermoplastic resin composition containing a highrefractive-index material and an optical lens formed from the resin composition. For example, PTL 1 proposes a thermoplastic resin composition containing a thermoplastic resin and a colorant, in which the thermoplastic resin composition has a refractive index of 1.60 or more at a wavelength of 894 nm, and, when the thermoplastic resin composition has a thickness of 1 mm, the maximum value of transmittance at wavelengths of 380 nm to 630 nm is more than 0% and 1.00% or less, and an average transmittance at wavelengths of 840 nm to 940 nm is 80% or more.

### Citation List

### Patent Literature

PTL 1: WO2020/138050

### Summary of Invention

### Technical Problem

In the related art, copper phthalocyanine is mainly used as a blue pigment, but there is a problem in that an infrared transmittance becomes low. Since copper is the central metal in most phthalocyanine pigments on the market, it is difficult to ensure high infrared transmission when toned with other colors, and a blue pigment for toning having high infrared transmittance is required. In addition, similarly to the above, a red pigment and a yellow pigment having high infrared transmittance are also required.

In the related art, although it is disclosed that noise derived from visible light is reduced by setting the maximum value of transmittance of visible light and the average transmittance of infrared light within the ranges, there is no mention of infrared transmittance and heat resistance of a resin composition containing a resin and any one or more of a phthalocyanine pigment such as an aluminum phthalocyanine pigment, a nickel azo complex, and a quinacridone pigment, and there remains room for improvement.

An object of the present invention is to provide a composition, a molded body, and a device, which can achieve both excellent transmission of infrared light and favorable heat resistance, and can realize improvement of sensing accuracy and excellent sensing stability.

### Solution to Problem

As a result of intensive studies, the present inventors have found that, when any one or more of a nickel azo complex, a quinacridone pigment, and a predetermined phthalocyanine pigment are added to a resin, infrared light is favorably transmitted, and favorable heat resistance can additionally be achieved, with the result that sensing accuracy is improved and excellent sensing can be stably achieved.

That is, the present invention provides the following configurations.
[1] A composition containing:
   a pigment; and
   a resin,
   in which the pigment includes one or more selected from the group consisting of a nickel azo complex pigment, a quinacridone pigment, and a phthalocyanine pigment represented by General Formula (Pc) or a dimer of the phthalocyanine pigment, 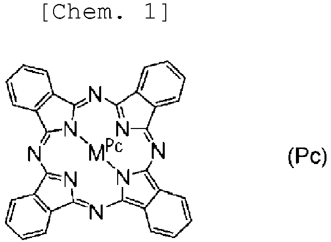
   (in the formula,
   M^{Pc} represents X^{Pc}-Al (trivalent aluminum), X^{Pc}-Co (trivalent cobalt), Sn (divalent tin), or Fe (divalent iron),
   X^{Pc} represents a hydroxyl group, a fluorine atom, a chlorine atom, a bromine atom, an iodine atom, -O-P(=O)R¹R², -O-C(=O)R³, or -OSO₂R⁴,
   R¹ and R² each independently represent a hydrogen atom, a hydroxyl group, an alkyl group which may have a substituent, an aryl group which may have a substituent, an alkoxy group which may have a substituent, or an aryloxy group which may have a substituent,
   R¹ and R² may be bonded to each other to form a ring,
   R³ represents a hydrogen atom, an alkyl group which may have a substituent, a cycloalkyl group which may have a substituent, an aryl group which may have a substituent, or a heterocyclic group which may have a substituent, and
   R⁴ represents a hydroxyl group, an alkyl group which may have a substituent, an aryl group which may have a substituent, or a heterocyclic group which may have a substituent).
[2] The composition according to [1], in which an average particle diameter of the pigment is 1 nm or more and 100 nm or less.
[3] The composition according to [1], in which the resin is selected from the group consisting of a polyethylene terephthalate (PET) resin, a polycarbonate (PC) resin, an acrylonitrile styrene (AS) resin, a polymethyl methacrylate (PMMA) resin, an acrylonitrile/butadiene/styrene (ABS) copolymer resin, a polyamide (PA) resin, and an aminoalkyd resin.
[4] The composition according to any one of [1] to [3], in which the composition is a composition for a molded body or a coating composition.
[5] A molded body formed by molding the composition for a molded body according to [4].
[6] The molded body according to [5], in which an infrared transmittance of the molded body at 900 nm is 60% or more.
[7] A device including the molded body according to [5] or [6].

### Advantageous Effects of Invention

According to the present invention, it is possible to provide a composition, a molded body, and a device, which can achieve both excellent transmission of infrared light and favorable heat resistance, and can realize improvement of sensing accuracy and excellent sensing stability.

### Brief Description of Drawings

[FIG. 1] FIG. 1 is an a*b* color space chromaticity diagram in which a* and b* in the CIE-L*a*b* color system of the molded bodies obtained in Examples and Comparative Example are measured and the results are plotted.
[FIG. 2] FIG. 2 is a schematic view showing an example of a device including a molded body formed by molding the composition for a molded body according to the present invention.

### Description of Embodiments

Hereinafter, embodiments of the present invention will be described. The present invention is not limited to the following embodiments.

### <Composition>

The composition according to the present embodiment is a composition containing a pigment and a resin, in which the pigment includes one or more selected from the group consisting of a nickel azo complex pigment, a quinacridone pigment, and a phthalocyanine pigment represented by General Formula (Pc) or a dimer of the phthalocyanine pigment.

### [Pigment]

### (Nickel azo complex pigment)

The nickel azo complex pigment is not particularly limited, and for example, includes a compound represented by Formula (1). The nickel azo complex pigment may include the compound represented by Formula (1), or may consist of the compound represented by Formula (1). The nickel azo complex pigment according to the present embodiment is typically contained in the composition as a yellow pigment.

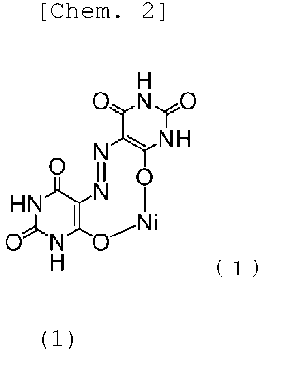

A content of the nickel azo complex pigment is not particularly limited, but is preferably 10% to 100% by mass, and more preferably 30% to 60% by mass with respect to 100% by mass of the total amount of the pigment.

### (Quinacridone pigment)

The quinacridone pigment is not particularly limited, and for example, includes at least one of compounds represented by Formulae (2) to (7). The quinacridone pigment according to the present embodiment is typically contained in the composition as a red pigment.

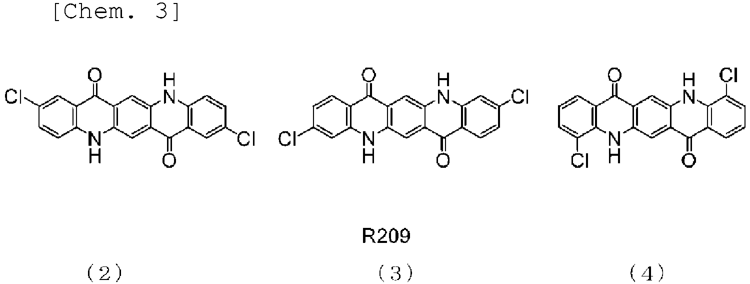

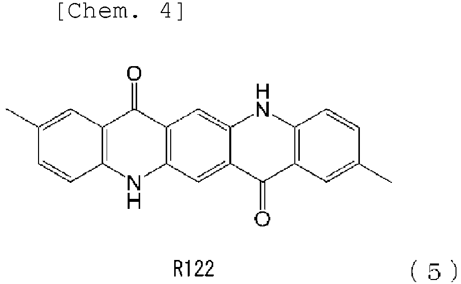

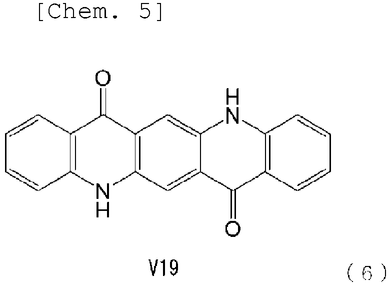

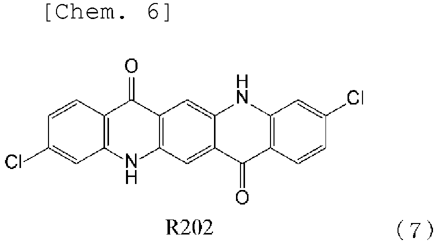

A content of the quinacridone pigment is not particularly limited, but is preferably 10% to 100% by mass, and more preferably 30% to 60% by mass with respect to 100% by mass of the total amount of the pigment.

The quinacridone pigment may consist of at least two selected from three specific types such as the isomers (R209) represented by Formulae (2) to (4), or may consist of the three specific types.

### (Phthalocyanine pigment)

The phthalocyanine pigment includes one or more selected from a compound represented by General Formula (Pc) and a dimer of the compound. Hereinafter, the "phthalocyanine pigment represented by General Formula (Pc) or a dimer of the phthalocyanine pigment" is also simply referred to as a phthalocyanine pigment. 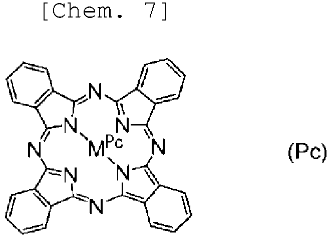 (in the formula,
M^{Pc} represents X^{Pc}-Al (trivalent aluminum), X^{Pc}-Co (trivalent cobalt), Sn (divalent tin), or Fe (divalent iron),
X^{Pc} represents a hydroxyl group, a fluorine atom, a chlorine atom, a bromine atom, an iodine atom, -O-P(=O)R¹R², -O-C(=O)R³, or -OSO₂R⁴,
R¹ and R² each independently represent a hydrogen atom, a hydroxyl group, an alkyl group which may have a substituent, an aryl group which may have a substituent, an alkoxy group which may have a substituent, or an aryloxy group which may have a substituent,
R¹ and R² may be bonded to each other to form a ring,
R³ represents a hydrogen atom, an alkyl group which may have a substituent, a cycloalkyl group which may have a substituent, an aryl group which may have a substituent, or a heterocyclic group which may have a substituent, and
R⁴ represents a hydroxyl group, an alkyl group which may have a substituent, an aryl group which may have a substituent, or a heterocyclic group which may have a substituent)

Examples of the alkyl group which may have a substituent include linear or branched alkyl groups such as a methyl group, an ethyl group, a propyl group, an isopropyl group, a butyl group, an isobutyl group, a tert-butyl group, a neopentyl group, an n-hexyl group, an n-octyl group, a stearyl group, and a 2-ethylhexyl group; and alkyl groups having a substituent, such as a trichloromethyl group, a trifluoromethyl group, a 2,2,2-trifluoroethyl group, a 2,2-dibromoethyl group, a 2,2,3,3-tetrafluoropropyl group, a 2-ethoxyethyl group, a 2-butoxyethyl group, a 2-nitropropyl group, a benzyl group, a 4-methylbenzyl group, a 4-tert-butylbenzyl group, a 4-methoxybenzyl group, a 4-nitrobenzyl group, and a 2,4-dichlorobenzyl group.

Among these, a linear or branched alkyl group is preferable, and a linear or branched alkyl group having 1 to 8 carbon atoms is more preferable.

Examples of "aryl group" in the "aryl group which may have a substituent" include aryl groups such as a phenyl group, a p-tolyl group, a naphthyl group, a 6-methyl-2-naphthyl group, and an anthryl group; and aryl groups having a substituent, such as a p-bromophenyl group, a p-nitrophenyl group, a p-methoxyphenyl group, a 2,4-dichlorophenyl group, a pentafluorophenyl group, a 2-aminophenyl group, a 2-methyl-4-chlorophenyl group, a 4-hydroxy-1-naphthyl group, a 4,5,8-trichloro-2-naphthyl group, an anthraquinonyl group, and a 2-aminoanthraquinonyl group.

Among these, an aryl group or an aryl group substituted with one chlorine atom, bromine atom, or nitro group is preferable, an aryl group is more preferable, a tolyl group or a phenyl group is further preferable, and a phenyl group is particularly preferable.

Examples of the alkoxy group which may have a substituent include linear or branched alkoxy groups such as a methoxy group, an ethoxy group, a propoxy group, an isopropoxy group, an n-butoxy group, an isobutoxy group, a tert-butoxy group, a neopentyloxy group, a 2,3-dimethyl-3-pentyloxy group, an n-hexyloxy group, an n-octyloxy group, a stearyloxy group, and a 2-ethylhexyloxy group; and alkoxy groups having a substituent, such as a trichloromethoxy group, a trifluoromethoxy group, a 2,2,2-trifluoroethoxy group, a 2,2,3,3-tetrafluoropropoxy group, a 2,2-di(trifluoromethyl)propoxy group, a 2-ethoxyethoxy group, a 2-butoxyethoxy group, a 2-nitropropoxy group, and a benzyloxy group.

Among these, a linear or branched alkoxy group is preferable, and a linear or branched alkoxy group having 1 to 8 carbon atoms is more preferable.

Examples of the aryloxy group which may have a substituent include aryloxy groups such as a phenoxy group, a p-methylphenoxy group, a naphthyloxy group, and an anthryloxy group; and aryloxy groups having a substituent, such as a p-nitrophenoxy group, a p-methoxyphenoxy group, a 2,4-dichlorophenoxy group, a pentafluorophenoxy group, and a 2-methyl-4-chlorophenoxy group.

Among these, an aryloxy group or an aryloxy group substituted with one chlorine atom, bromine atom, or nitro group is preferable, an aryloxy group is more preferable, a p-methylphenoxy group or a phenoxy group is further preferable, and a phenoxy group is particularly preferable.

Examples of the cycloalkyl group which may have a substituent include cycloalkyl groups such as a cyclopentyl group, a cyclohexyl group, and an adamantyl group; and cycloalkyl groups having a substituent, such as a 2,5-dimethylcyclopentyl group and a 4-tert-butylcyclohexyl group.

Examples of "heterocyclic group" in the "heterocyclic group which may have a substituent" include heterocyclic groups such as a pyridyl group, an N-oxopyridyl group, a pyrazyl group, a piperidino group, a pyranyl group, a morpholino group, and an acridinyl group; and heterocyclic groups having a substituent, such as a 3-methylpyridyl group, an N-methylpiperidyl group, and an N-methylpyrrolyl group.

Among these, a pyridyl group or an N-oxopyridyl group is preferable.

The phthalocyanine pigment is not particularly limited as long as it is the compound represented by General Formula (Pc) or a dimer of the compound. For example, when M^{Pc} in the formula is X^{Pc}-Al (trivalent aluminum), X^{Pc}-Co (trivalent cobalt), Sn (divalent tin), or Fe (divalent iron), the phthalocyanine pigment is represented by the following structural formulae (Al-Cl/Pc), (Al-F/Pc), (Al-Br/Pc), (Al-I/Pc), (Co-Cl/Pc), (Co-F/Pc), (Co-Br/Pc), (Co-I/Pc), (Sn/Pc), (Fe/Pc), (Al-OH/Pc), (Pc/Al-O-Al/Pc), (Co-OH/Pc), and (Pc/Co-O-Co/Pc), respectively. The phthalocyanine pigment according to the present embodiment is typically contained in the composition as a blue pigment.

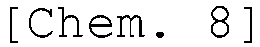

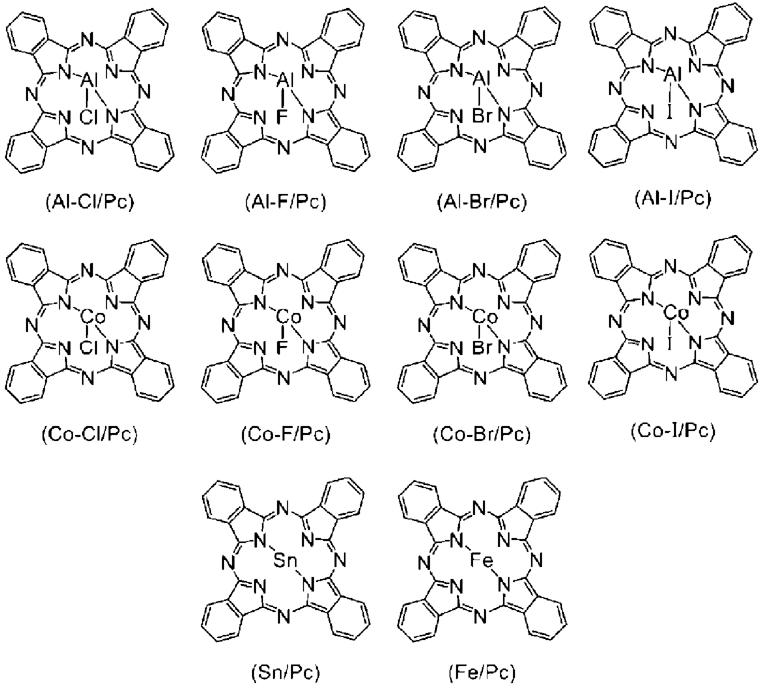

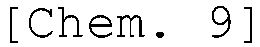

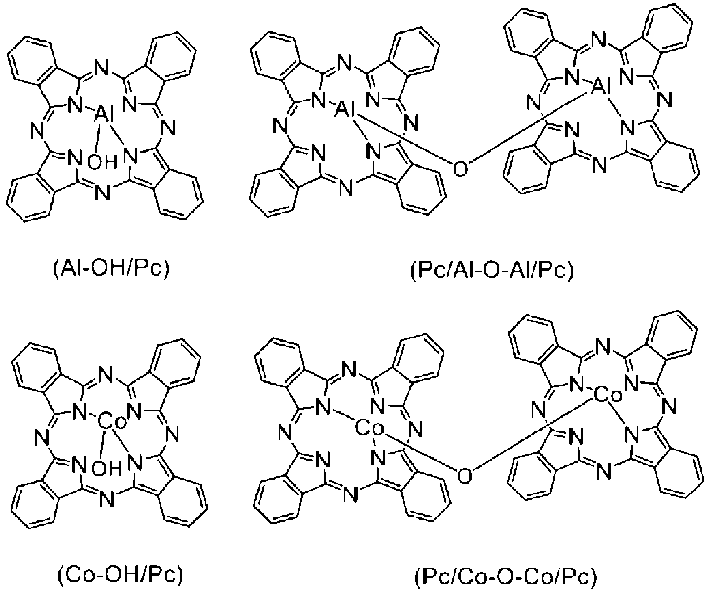

An average particle diameter of the pigment is not particularly limited, but may be 1 nm or more, 3 nm or more, 5 nm or more, 10 nm or more, or 15 nm or more. In addition, the average particle diameter of the pigment may be 100 nm or less, 75 nm or less, 45 nm or less, or 35 nm or less. When the average particle diameter of the phthalocyanine pigment is 1 nm or more and 100 nm or less, dispersibility of the phthalocyanine pigment can be enhanced, and saturation can be improved with a small added amount. In the present embodiment, the average particle diameter means a crystallite diameter calculated from the full width at half maximum measured by powder X-ray diffraction.

A content of the phthalocyanine pigment is not particularly limited, but is preferably 10% to 100% by mass, and more preferably 30% to 60% by mass with respect to 100% by mass of the total amount of the pigment.

In the composition according to the present embodiment, it is preferable that the pigment includes two types selected from the group consisting of the nickel azo complex pigment, the quinacridone pigment, and the phthalocyanine pigment represented by General Formula (Pc) or a dimer of the phthalocyanine pigment. When the pigment includes two types selected from the group consisting of the nickel azo complex pigment, the quinacridone pigment, and the phthalocyanine pigment represented by General Formula (Pc) or a dimer of the phthalocyanine pigment, it is possible to achieve high infrared transmission during toning, and to broaden a hue while maintaining saturation in a mixed color of yellow and red, a mixed color of red and blue, or a mixed color of blue and yellow.

When the pigment includes the nickel azo complex pigment and the quinacridone pigment, the content of the nickel azo complex pigment is preferably 30 to 70% by mass, and more preferably 40 to 60% by mass with respect to 100% by mass of the total amount of the pigment, from the viewpoint of the action and effect. In this case, the content of the quinacridone pigment is preferably 30% to 70% by mass, and more preferably 40% to 70% by mass with respect to 100% by mass of the total amount of the pigment.

When the pigment includes the quinacridone pigment and the phthalocyanine pigment, the content of the quinacridone pigment is preferably 30% to 70% by mass, and more preferably 40% to 60% by mass, with respect to 100% by mass of the total amount of the pigment, from the viewpoint of the action and effect. In this case, the content of the phthalocyanine pigment is preferably 30% to 70% by mass, and more preferably 40% to 60% by mass with respect to 100% by mass of the total amount of the pigment.

When the pigment includes the phthalocyanine pigment and the nickel azo complex pigment, the content of the phthalocyanine pigment is preferably 30% to 70% by mass, and more preferably 40% to 60% by mass with respect to 100% by mass of the total amount of the pigment. In this case, the content of the nickel azo complex pigment is preferably 30% to 70% by mass, and more preferably 40% to 60% by mass with respect to 100% by mass of the total amount of the pigment.

In addition, the pigment may include three types selected from the group consisting of the nickel azo complex pigment, the quinacridone pigment, and the phthalocyanine pigment represented by General Formula (Pc) or a dimer of the phthalocyanine pigment. Also in this case, high infrared transmission can be ensured during toning.

### (Other pigments)

The pigment according to the present embodiment may include one or more other pigments different from the specific pigment, on the premise that the specific pigment is contained. Examples of the other pigments include other phthalocyanine pigments other than the phthalocyanine pigment represented by General Formula (Pc) or a dimer of the phthalocyanine pigment described above. Examples of the other phthalocyanine pigments include a compound represented by Formula (8).

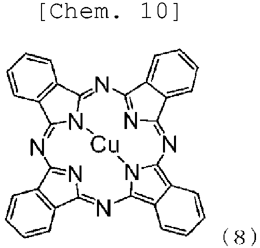

An average particle diameter of the other pigments is not particularly limited, but may be 1 nm or more, 3 nm or more, 5 nm or more, 10 nm or more, or 15 nm or more. In addition, the average particle diameter of the pigment may be 100 nm or less, 75 nm or less, 45 nm or less, or 35 nm or less. When the average particle diameter of the phthalocyanine pigment is 1 nm or more and 100 nm or less, dispersibility of the phthalocyanine pigment can be enhanced, and saturation can be improved with a small added amount. In the present embodiment, the average particle diameter means a crystallite diameter calculated from the full width at half maximum measured by powder X-ray diffraction.

### [Resin]

The resin is not particularly limited, but is preferably one or more selected from the group consisting of a polyethylene terephthalate (PET) resin, a polycarbonate (PC) resin, an acrylonitrile styrene (AS) resin, a polymethyl methacrylate (PMMA) resin, an acrylonitrile/butadiene/styrene (ABS) copolymer resin, a polyamide (PA) resin, and an aminoalkyd resin. When the composition is used for a molded body, either or both of a polyethylene terephthalate (PET) resin and a polycarbonate (PC) resin are more preferable from the viewpoint of heat resistance and impact resistance.

A melting point of the resin is preferably 150°C to 350°C and more preferably 200°C to 300°C.

The melting point of the resin in the present embodiment is determined by placing approximately 5 mg of the resin in an aluminum (Al) pan, placing the pan on the sample stage of a thermogravimetric/differential thermal analyzer (TG-DTA, manufactured by Hitachi High-Tech Science Corporation), measuring while increasing the temperature stepwise from 30°C to 400°C, and defining, as the melting point, the temperature at which the sample has completely melted from the temperature at which the sample starts to melt.

Application of the composition according to the present embodiment is not particularly limited, and examples thereof include a composition for a molded body and a coating composition.

A content of the resin in the composition can be appropriately determined in accordance with the application of the composition.

For example, in the composition for a molded body, the content thereof is preferably 5,000 to 50,000 parts by mass, and more preferably 5,000 to 15,000 parts by mass with respect to 10 parts by mass of the total amount of the pigment.

For example, in the coating composition, the content thereof is preferably 50 to 500 parts by mass, and more preferably 50 to 100 parts by mass with respect to 10 parts by mass of the total amount of the pigment.

The "total amount of the pigment" refers to the mass of the pigment itself even when the purity of the pigment is 90%, for example, and is not the mass in consideration of the purity.

### [Dispersing aid]

When dispersing the nickel azo complex pigment, the quinacridone pigment, and/or the phthalocyanine pigment in the composition, a dispersing aid such as a coloring agent derivative and a surfactant can be appropriately used. By using the dispersing aid, saturation of the molded body can be further increased, and a broader hue can be achieved.

The coloring agent derivative is not particularly limited, and examples thereof include compounds obtained by introducing, into an organic pigment, anthraquinone, acridone, or triazine, a basic substituent, an acidic substituent, or a phthalimidomethyl group which may have a substituent.

Examples of the surfactant include, but are not particularly limited to, anionic surfactants such as sodium lauryl sulfate, polyoxyethylene alkyl ether sulfates, sodium dodecylbenzenesulfonate, alkali salts of styrene-acrylic acid copolymers, sodium stearate, sodium alkylnaphthalenesulfonate, sodium alkyldiphenyl ether disulfonate, monoethanolamine lauryl sulfate, triethanolamine lauryl sulfate, ammonium lauryl sulfate, monoethanolamine stearate, monoethanolamine salts of styrene-acrylic acid copolymers, and polyoxyethylene alkyl ether phosphate esters; nonionic surfactants such as polyoxyethylene oleyl ether, polyoxyethylene lauryl ether, polyoxyethylene nonylphenyl ether, polyoxyethylene alkyl ether phosphate esters, polyoxyethylene sorbitan monostearate, and polyethylene glycol monolaurate; cationic surfactants such as alkyl quaternary ammonium salts and ethylene oxide adducts thereof; and amphoteric surfactants such as alkyl betaines, including alkyldimethylaminoacetate betaine, and alkylimidazolines. These may be used alone or in combination of two or more thereof.

### [Other components]

The composition according to the present embodiment may contain an antioxidant and a mold release agent as an additive.

Examples of the antioxidant include triethylene glycol-bis[3-(3-tert-butyl-5-methyl-4-hydroxyphenyl)propionate], 1,6-hexanediol-bis[3-(3,5-ditert-butyl-4-hydroxyphenyl)propionate], pentaerythritoltetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxyhydrocinnamide), 3,5-di-tert-butyl-4-hydroxybenzylphosphonate diethyl ester, tris(3,5-di-tert-butyl-4-hydroxybenzyl) isocyanurate, and 3,9-bis{1,1-dimethyl-2-[β-(3-tert-butyl-4-hydroxy-5-methylphenyl)propionyloxy]ethyl}-2,4,8,10-tetraoxaspiro[5,5]undecane.

The mold release agent is preferably one in which 90% by mass or more thereof is composed of an ester of an alcohol and a fatty acid. Specific examples of the ester of an alcohol and a fatty acid include esters of a monohydric alcohol and a fatty acid, and partial esters or complete esters of a polyhydric alcohol and a fatty acid. As the ester of a monohydric alcohol and a fatty acid, an ester of a monohydric alcohol having 1 to 20 carbon atoms and a saturated fatty acid having 10 to 30 carbon atoms is preferable. In addition, as the partial ester or complete ester of a polyhydric alcohol and a fatty acid, a partial ester or a complete ester of a polyhydric alcohol having 1 to 25 carbon atoms and a saturated fatty acid having 10 to 30 carbon atoms is preferable.

Specific examples of the ester of a monohydric alcohol and a saturated fatty acid include stearyl stearate, palmityl palmitate, butyl stearate, methyl laurate, and isopropyl palmitate. Examples of the partial ester or complete ester of a polyhydric alcohol and a saturated fatty acid include stearic acid monoglyceride, stearic acid diglyceride, stearic acid triglyceride, stearic acid monosorbitate, behenic acid monoglyceride, capric acid monoglyceride, lauric acid monoglyceride, pentaerythritol monostearate, pentaerythritol tetrastearate, pentaerythritol tetrapelargonate, propylene glycol monostearate, biphenyl biphenate, sorbitan monostearate, 2-ethylhexyl stearate, and complete esters or partial esters of dipentaerythritol, such as dipentaerythritol hexastearate.

Furthermore, the composition according to the present embodiment may further contain, as other additives, processing stabilizers, ultraviolet absorbers, fluidity modifiers, crystal nucleating agents, reinforcing agents, dyes, antistatic agents, bluing agents, antibacterial agents, or the like.

### <Method for producing composition>

In a method for producing the composition according to the present embodiment, the composition is obtained by mixing a nickel azo complex pigment, a quinacridone pigment, a phthalocyanine pigment including one or more selected from the compound represented by General Formula (Pc) and a dimer of the compound, and a resin.

The method for producing the composition is not limited to the above, and may include, for example, a step of obtaining a pigment mixture by mixing the nickel azo complex pigment, the quinacridone pigment, and the phthalocyanine pigment including one or more selected from the compound represented by General Formula (Pc) and a dimer of the compound, and a step of obtaining the composition by mixing the pigment mixture and the resin. In addition, other steps may be included before the step of obtaining the pigment mixture, between the step of obtaining the pigment mixture and the step of obtaining the composition, and/or after the step of obtaining the composition, without departing from the spirit of the present invention.

### <Molded body>

The molded body according to the present embodiment is formed by molding the composition for a molded body. A molding method is not particularly limited, and an injection molding method, an extrusion molding method, a blow molding method, a compression molding method, a vacuum molding method, and the like can be used. For example, when producing a three-dimensional product, the injection molding method can be used, and when producing a plate-like product, a flat press or the like can be used in addition to the extrusion molding method. When producing a filmshaped product, a solution casting method can be used in addition to melt extrusion, and examples of the melt molding method include inflation film molding, cast molding, extrusion lamination molding, calender molding, sheet molding, fiber molding, blow molding, injection molding, rotational molding, and coating molding. Further, in the case of a resin cured by an active energy ray, a cured product can be produced by using various curing methods using active energy rays. In particular, when a thermosetting resin is used as a main component of a matrix resin, examples of the molding method include a molding method in which the molding material is formed into a prepreg and pressurized and heated using a press or an autoclave. Other examples thereof include Resin Transfer Molding (RTM), Vacuum-assisted Resin Transfer Molding (VaRTM), lamination molding, and hand lay-up molding.

### <Infrared transmittance>

An infrared transmittance of the molded body according to the present embodiment at a wavelength of 900 nm is not particularly limited, but is preferably 60% or more, more preferably 70% or more, and still more preferably 80% or more. More specifically, the infrared transmittance is preferably 60% to 90%, and preferably 80% to 90%. When the infrared transmittance of the molded body at a wavelength of 900 nm is 60% or more, infrared light is more favorably transmitted, and thus the sensing accuracy can be further improved.

### <Heat resistance>

In the molded body according to the present embodiment, a color difference ΔE^{*}ab value calculated from the following expression (A) using L*, a*, and b* in the CIE-L*a*b* color system is preferably less than 3, more preferably 0.05 to 2.5, and still more preferably 0.075 to 1.5. When the color difference ΔE^{*}ab value is less than 3, a color change caused by light irradiation in a wavelength range from ultraviolet light to infrared light is small, stability against heat is high, and favorable heat resistance can be achieved. $ΔE * ab = {\left[{\left(ΔL*\right)}^{2}+{\left(Δa*\right)}^{2}+{\left(Δb*\right)}^{2}\right]}^{1 / 2}$ [in Expression (A), ΔL* = L₁^{*} - L₀^{*}, Δa* = a₁^{*} - a₀^{*}, and Δb* = b₁^{*} - b₀^{*}, L₀^{*}, a₀^{*}, and b₀^{*} represent color coordinates of the molded body before irradiation with a xenon lamp, and L₁^{*}, a₁^{*}, and b₁^{*} represent color coordinates of the molded body after irradiation with a xenon lamp]

### <Device>

The device according to the present embodiment is not particularly limited as long as it includes the molded body, but is typically a sensor. The application of the sensor is also not particularly limited, but is, for example, a remote sensing method such as LiDAR. Examples of the sensor of a remote sensing method include a near-infrared (NIR) sensor used for ADAS/AD of a vehicle.

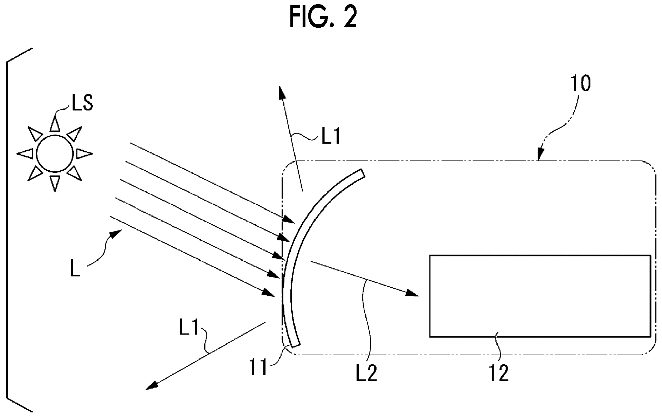

FIG. 2 is a schematic view showing an example of the device including the molded body formed by molding the composition for a molded body according to the present invention. In the device, LiDAR is typically adopted.

In FIG. 2, a device 10 includes a reflector 11 formed of a molded body obtained by molding the composition for a molded body, and an optical sensor 12.

The reflector 11 transmits a light beam of a specific wavelength among light beams L emitted from a light source LS. For example, the reflector 11 blocks visible light L1 and transmits infrared light L2 among the light beams L emitted from the light source LS. Accordingly, improvement in sensing accuracy and excellent sensing stability in the optical sensor 12 can be realized, and reliability of the device 10 can be improved.

### EXAMPLES

Hereinafter, Examples of the present invention will be described. The present invention is not limited to Examples.

### (Examples 1 to 11)

### [Production of composition for molded body]

A phthalocyanine pigment, a nickel azo complex pigment, and a quinacridone pigment were mixed so as to have a molar ratio shown in Table 1 to prepare a pigment mixture. Next, 10,000 parts by mass of a resin was added to 10 parts by mass of the pigment mixture and mixed to obtain a composition for a molded body. The nickel azo complex pigment, the quinacridone pigment, the phthalocyanine pigment, and the resin used in each of Examples are shown below. The purity of each pigment and the resin is approximately 100%.

### (Nickel azo complex pigment)

· Ni-AC-1
   average particle diameter: 20 nm, molecular weight: 338.85;
   product name: Pigment Yellow 150;
   manufacturer: DIC Corporation

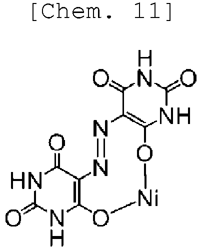

### (Quinacridone pigment)

· Qu-1
   average particle diameter: 11 nm, molecular weight: 381.21;
   product name: Pigment Red 209
   manufacturer: DIC Corporation

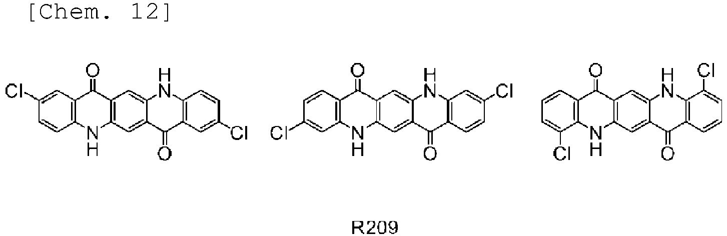

### (Phthalocyanine pigment)

· Aluminum phthalocyanine pigment (Al-Cl/Pc)
   average particle diameter: 13 nm, M^{Pc}: Al, X^{Pc}: Cl, molecular weight: 574.97;
   product name: PB79;
   manufacturer: Joint Venture Meilida Pigment Industry Co., Ltd.

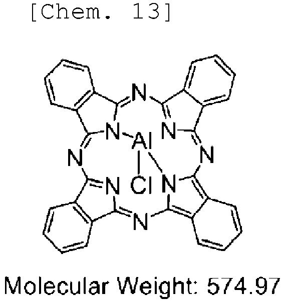

### (Resin)

· Polycarbonate resin (PC-1)
   product name: PANLITE L-1225Z;
   manufacturer: Teijin Limited;
   melting point: 221°C to 242°C;
   weight-average molecular weight (Mw): 21,600;
   in the structural formula, n represents an integer which is not 0. 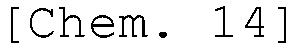 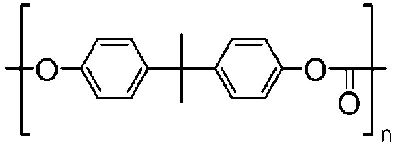
· Polyethylene terephthalate resin (PET-1)
   product name: Mitsui PET J125;
   manufacturer: Mitsui Chemicals, Inc.
   melting point: 251°C to 262°C;
   viscosity (IV): 0.76 dl/g;
   in the structural formula, n represents an integer which is not 0. 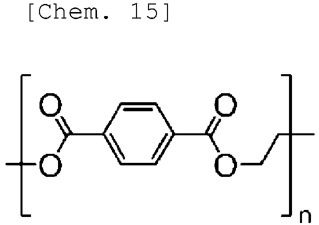
· Polyethylene terephthalate resin (PET-2)
   product name: Mitsui PET J135;
   manufacturer: Mitsui Chemicals, Inc.
   melting point: 251°C to 263°C;
   viscosity (IV): 0.85 dl/g;
   in the structural formula, n represents an integer which is not 0.

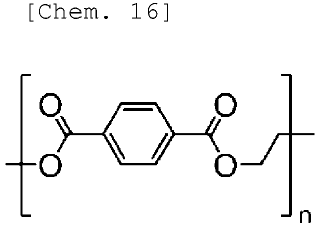

### [Production of molded body]

The composition for a molded body obtained in each of Examples was put into an injection molding machine (manufactured by Nissei Plastic Industrial Co., Ltd., device name "PNX60III-5A"), and injection molding was carried out under the following two conditions to obtain a rectangular parallelepiped molded body 1 and molded body 2.
· Molded body 1
   molding temperature: 280°C;
   residence time: 0 minutes;
   dimensions: length of 5 cm, width of 4 cm, and height of 2 mm
· Molded body 2
   molding temperature: 280°C;
   residence time: 10 minutes;
   dimensions: length of 5 cm, width of 4 cm, and height of 2 mm

### (Comparative Example 1)

A composition for a molded body and a molded body were obtained in the same manner as in Example 1, except that a copper phthalocyanine pigment shown below was used instead of the aluminum phthalocyanine pigment.
· Copper phthalocyanine pigment (Cu/Pc)
   average particle diameter: 22 nm, M: Cu, molecular weight: 576.08;
   product name: FASTGEN BLUE PA5380;
   manufacturer: DIC Corporation

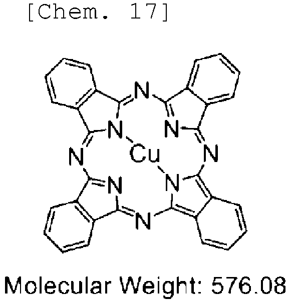

The molded bodies obtained in Examples and Comparative Examples were measured and evaluated by the following methods.

### [Infrared transmittance]

The infrared transmittance of the molded body 1 was measured using a spectrophotometer (manufactured by JASCO Corporation, device name "V-770"). An integrating sphere (manufactured by JASCO Corporation, device name "ISN-923") was used as an attached device, and the measurement was carried out in a range of 300 nm to 2,500 nm in 2 nm increments. When the infrared transmittance was 60% or more, it indicates favorable infrared transmittance; and it can be determined that, as the value of the infrared transmittance was higher, the infrared transmittance was higher.

### [Heat resistance]

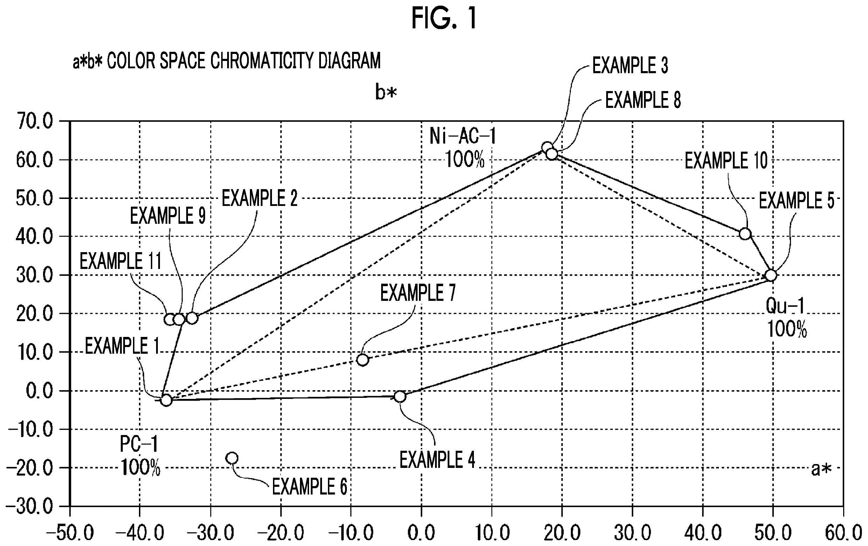

Colorimetric values of the molded body 1 and the molded body 2 were obtained using a spectrophotometer (manufactured by Sun Color, device name "Datacolor 650"). Next, ΔE^{*}ab (= colorimetric value of molded body 2 - colorimetric value of molded body 1) was obtained using the above expression (A). When the ΔE^{*}ab value was less than 3, favorable heat resistance was exhibited; and it could be determined that, as the ΔE^{*}ab value was smaller, the color change was smaller and the heat resistance was higher. The results are shown in Table 1 and FIG. 1. The colorimetric values (a* and b*) shown in Table 1 are those of the molded body 1.

**[Table 1]**

| | Pigment | | | | | | | | | Resin | | Molded body | | | |
|---|---|---|---|---|---|---|---|---|---|---|---|---|---|---|---|
| | Phthalocyanine pigment | | Nickel azo complex pigment | | Quinacridone pigment | | Other pigments | | Total | | | a* | b* | Infrared transmittance | Heat resistance |
| | Type | Content (part by mass) | Type | Content (part by mass) | Type | Content (part by mass) | Type | Content (part by mass) | Content (part by mass) | Type | Content (part by mass) | [-] | [-] | [900 nm, %] | [ΔE*ab, -] |
| Example 1 | Pc-1 | 10 | | | | | | | 10 | PC-1 | 10000 | -36.2 | -2.5 | 85 | 0.9 |
| Example 2 | Pc-1 | 5 | Ni-AC-1 | 5 | | | | | 10 | PC-1 | 10000 | -32.6 | 18.8 | 83 | 1.2 |
| Example 3 | | | Ni-AC-1 | 10 | | | | | 10 | PC-1 | 10000 | 17.8 | 63.1 | 83 | 2.7 |
| Example 4 | Pc-1 | 5 | | | Qu-1 | 5 | | | 10 | PC-1 | 10000 | -3.1 | -1.5 | 83 | 2.6 |
| Example 5 | | | | | Qu-1 | 10 | | | 10 | PC-1 | 10000 | 49.7 | 29.9 | 83 | 1.4 |
| Example 6 | Pc-1 | 5 | | | | | Cu/Pc | 5 | 10 | PC-1 | 10000 | -27.0 | -17.5 | 75 | 1.4 |
| Example 7 | Pc-1 | 3.4 | Ni-AC-1 | 3.3 | Qu-1 | 3.3 | | | 10 | PC-1 | 10000 | -8.4 | 7.9 | 83 | 1.5 |
| Example 8 | | | Ni-AC-1 | 10 | | | | | 10 | PET-1 | 10000 | 18.5 | 61.3 | 82 | 0.7 |
| Example 9 | Pc-1 | 5 | Ni-AC-1 | 5 | | | | | 10 | PET-1 | 10000 | -34.5 | 18.5 | 83 | 1.0 |
| Example 10 | | | Ni-AC-1 | 5 | Qu-1 | 5 | | | 10 | PET-1 | 10000 | 46.0 | 40.6 | 79 | 1.4 |
| Example 11 | Pc-1 | 5 | Ni-AC-1 | 5 | | | | | 10 | PET-2 | 10000 | -35.7 | 18.5 | 82 | 1.9 |
| Comparative Example 1 | | | | | | | Cu/Pc | 10 | 10 | PC-1 | 10000 | -11.0 | -26.6 | 55 | 1.5 |

From the results in Table 1, it was found that, in any of Examples 1 to 11, the infrared transmittance at a wavelength of 900 nm was 60% or more, and the ΔE^{*}ab value was less than 3, which indicates excellent transmission of infrared light and favorable heat resistance.

In addition, as shown in FIG. 1, in Examples 2 to 3, 5 to 6, and 8 to 11, it was confirmed that a hue was broadened while maintaining saturation in a mixed color of yellow and red, a mixed color of red and blue, or a mixed color of blue and yellow. In particular, in Examples 2, 4, 6, 9, and 11, the pigment contained the predetermined phthalocyanine pigment, and it was confirmed that the hue was further broadened in the mixed color of red and blue or the mixed color of blue and yellow.

On the other hand, in Comparative Example 1, the pigment consisted of only the copper phthalocyanine pigment, the infrared transmittance at a wavelength of 900 nm was 55%, and the infrared transmittance was deteriorated.

### Reference Signs List

10: device
11: reflector
12: optical sensor

## Claims

1. A composition comprising:
a pigment; and
a resin,
wherein the pigment includes one or more selected from the group consisting of a nickel azo complex pigment, a quinacridone pigment, and a phthalocyanine pigment represented by General Formula (Pc) or a dimer of the phthalocyanine pigment, 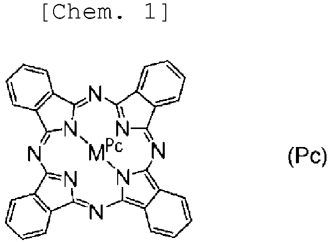
(in the formula,
M^{Pc} represents X^{Pc}-Al (trivalent aluminum), X^{Pc}-Co (trivalent cobalt), Sn (divalent tin), or Fe (divalent iron),
X^{Pc} represents a hydroxyl group, a fluorine atom, a chlorine atom, a bromine atom, an iodine atom, -O-P(=O)R¹R², -O-C(=O)R³, or -OSO₂R⁴,
R¹ and R² each independently represent a hydrogen atom, a hydroxyl group, an alkyl group which may have a substituent, an aryl group which may have a substituent, an alkoxy group which may have a substituent, or an aryloxy group which may have a substituent,
R¹ and R² may be bonded to each other to form a ring,
R³ represents a hydrogen atom, an alkyl group which may have a substituent, a cycloalkyl group which may have a substituent, an aryl group which may have a substituent, or a heterocyclic group which may have a substituent, and
R⁴ represents a hydroxyl group, an alkyl group which may have a substituent, an aryl group which may have a substituent, or a heterocyclic group which may have a substituent).

2. The composition according to claim 1, wherein an average particle diameter of the pigment is 1 nm or more and 100 nm or less.

3. The composition according to claim 1, wherein the resin is selected from the group consisting of a polyethylene terephthalate (PET) resin, a polycarbonate (PC) resin, an acrylonitrile styrene (AS) resin, a polymethyl methacrylate (PMMA) resin, an acrylonitrile/butadiene/styrene (ABS) copolymer resin, a polyamide (PA) resin, and an aminoalkyd resin.

4. The composition according to any one of claims 1 to 3, wherein the composition is a composition for a molded body or a coating composition.

5. A molded body formed by molding the composition for a molded body according to claim 4.

6. The molded body according to claim 5, wherein an infrared transmittance of the molded body at 900 nm is 60% or more.

7. A device comprising the molded body according to claim 5.
